# NEUE EUROPÄISCHE PATENTSCHRIFT

(11) **EP 1 615 528 B2**
(45) Veröffentlichungstag und Bekanntmachung des Hinweises auf die Entscheidung über den Einspruch: **21.02.2018**
(45) Hinweis auf die Patenterteilung: 30.04.2014
(21) Anmeldenummer: 04728311.4
(22) Anmeldetag: 20.04.2004
(51) Int. Cl.: F16B 12/40, A47B 47/00, A47B 87/02

(54) **VERBINDUNGSELEMENT UND GESTELLSYSTEM**
CONNECTING ELEMENT AND FRAME SYSTEM
ELEMENT DE LIAISON ET SYSTEME DE BATI

(30) Priorität: 22.04.2003 CH 712032003
(43) Veröffentlichungstag der Anmeldung: 18.01.2006
(60) Teilanmeldung: 08015989.0
(73) Patentinhaber: Streng Plastic AG, 8155 Niederhasli (CH)
(72) Erfinder: EGLI, Rolf, CH-8932 Mettmenstetten (CH); WANG, Chang, Chou c/o Chang E. Metal Industry Co., Erhlin Chen, Changhua Hsien 526 (TW)
(74) Vertreter: Frei Patent Attorneys
(86) Internationale Anmeldenummer: PCT/CH2004/000238
(87) Internationale Veröffentlichungsnummer: WO 2004/093603

(56) Entgegenhaltungen:
- GB-A- 1 011 688
- US-A- 7 318
- US-A- 3 765 541
- US-A- 3 883 257
- US-A- 5 549 408
- US-B1- 6 260 488

## Beschreibung

Die Erfindung bezieht sich auf das Gebiet zerlegbarer Gestellkonstruktionen für den Möbelbau, insbesondere auf ein Verbindungselement und ein Gestellsystem gemäss dem Oberbegriff der Patentansprüche 1 und 9.

### STAND DER TECHNIK

Derartige Verbindungselemente und darauf basierende Gestellsysteme sind beispielsweise aus EP 0 400 345 B1 und den darin zitierten Schriften bekannt. Dabei sind in rohrfömigen Streben Keile oder keilförmige Hülsen eingesetzt. Diese werden mittels einer Spannschraube gegeneinander gezogen, verkeilen sich mit den Streben und erzeugen dadurch eine kraftschlüssige Verbindung mit einem Eckverbindungselement. Die Verbindungselemente sind in der Regel kompliziert zu fertigen, weisen eine Menge loser Einzelteile auf und benötigen oftmals spezielle Montagewerkzeuge,

GB 1,011,688 offenbart ein Verbindungselement, welches mehrere, von einem Zentralelement ausgehende Kupplungselemente zur Verbindung mit rohrförmigen Streben aufweist. Die Kupplungslemente weisen eine rotationszylindrische Grundform mit mindestens einer Kupplungsausnehmung auf, wobei eine Kupplungsausnehmung gebildet ist durch zwei im wesentlichen senkrecht zu einer Achse des Zylinders verlaufenden Quernuten, sowie durch eine Längsnut, welche parallel zur Achse des Zylinders von einer Stirnseite des Kupplungselements durch eine erste Quernut bis zu einer zweiten Quernut führt.

Die Streben weisen nach innen vorstehende Ausbuchtungen auf, welche beim Aufstecken der Streben auf die Kupplungselemente in die Längsnuten eingreifen. Nach dem vollständigen Aufstecken der Streben werden die Streben verdreht, wobei die Ausbuchtungen in die Quernuten eingreifen und so ein Abziehen der Streben verhindern.

US 6,260,488 B1 zeigt ein Regalsystem, dessen senkrecht verlaufende Stützen jeweils durch ein Verbindungselement mit einer weiteren Stütze verbunden und so verlängert werden können. Beim Aufstecken einer Stütze auf ein Verbindungselement greift auch hier eine Ausbuchtung in eine Längsnut des Verbindungselementes ein und lässt sich nach dem vollständigen Aufstecken in einen quer verlaufenden Abschnitt der Nut drehen. Dabei kann dieser quer verlaufende Abschnitt eine Nocke (70) aufweisen, so dass beim Drehen der Stütze die Ausbuchtung über die Nocke einrastet. Ferner kann der quer verlaufende Abschnitt der Nut eine abnehmende Tiefe aufweisen, so dass beim Drehen der Stütze die Ausbuchtungen gegen den Boden der Nut gedrückt werden und eine Klemmwirkung auftritt.

US 3,765,541 zeigt ein Regalbausystem, in welchem senkrechte Streben durch Gewindestangen miteinander verbunden sind, wobei die Gewindestangen durch Distanzelemente ("spacer members") sowie durch Verbindungsplatten führen. Die Verbindungsplatten dienen zur Verbindung von waagrechten Streben.

### DARSTELLUNG DER ERFINDUNG

Es ist deshalb Aufgabe der Erfindung, ein Verbindungselement und ein Gestellsystem der eingangs genannten Art zu schaffen, welche die oben genannten Nachteile behebt.

Diese Aufgabe lösen ein Verbindungselement und ein Gestellsystem mit den Merkmalen der Patentansprüche 1 und 9.

Ein Verbindungselement weist also Kupplungslemente auf, die eine rotationszylindrische Grundform mit mindestens einer Kupplungsausnehmung aufweisen. Eine Kupplungsausnehmung ist durch eine im wesentlichen senkrecht zu einer Achse des Zylinders verlaufenden Quernut und durch eine parallel zur Achse des Zylinders von einer Stirnseite des Kupplungselements bis zur Quernut führenden Längsnut gebildet.

Das erfindungsgemässe Verbindungselement erlaubt, in einfacher Weise eine Verbindung zu einer korrespondierend ausgebildeten Strebe eines Gestells herzustellen, ohne dass irgendwelche Zusatzteile wie Keile, Schrauben etc. erforderlich sind. Auch müssen keine Gewinde in das Verbindungselement geschnitten werden. Ebenso sind keine Werkzeuge zum Herstellen oder Trennen einer Verbindung notwendig.

Zum Herstellen einer Verbindung wird eine Strebe über das Kupplungslement geschoben, wobei mindestens ein nach innen weisendes Verriegelungselement der Strebe in der Nut des Kupplungslements geführt wird. Nachdem das Kupplungselement die Position der Quernut erreicht, wird es durch Drehen der Strebe um ihre Achse in die Quernut hineingedreht. Dabei sind die Quernut und/oder das Kupplungselement derart geformt, dass sie sich beim Drehen miteinander verklemmen. In einer bevorzugten Ausführungsform der Erfindung rastet das Verriegelungselement hinter einer Ausformung der Quernut, die ein Einrastelement bildet, ein.

Das Verklemmen geschieht beispielsweise dadurch, dass beim Drehen der Strebe eine Stirnfläche der Strebe gegen eine erste Fläche der Quernut gedrückt und eine Kontaktfläche des Verriegelungselements gegen eine zweite Fläche der Quernut gedrückt wird, wobei die erste und zweite Fläche der Quernut einander gegenüberstehen.

In einer bevorzugten Ausführungsform der Erfindung sind die Längsnut und die Quernut in Umfangsrichtung, respektive in Achsrichtung des Kupplungselements gesehen, symmetrisch zueinander angeordnet, das heisst, dass die Strebe nach dem Schieben entlang der Längsnut in beide Drehrichtungen in die Quernut hineindrehbar ist. Damit wird es möglich, an beiden Enden einer Strebe jeweils ein gleich geartetes Kupplungselement in die Strebe einzuschieben und dann die Strebe durch Verdrehen gleichzeitig an beiden Enden zu verriegeln. Dabei müssen die beiden Verbindungselemente nicht gegeneinander verdreht werden, was von Vorteil ist, wenn sie bereits mit anderen Gestellteilen kombiniert sind.

Ein Verbindungselement weist in der Regel zwei bis vier Kupplungselemente auf, deren jeweilige Längsachsen in einer gemeinsamen Ebene oder Regalebene liegen. Sind die Winkel der Kupplungselemente zueinander ein Vielfaches eines rechten Winkels, so lässt sich daraus, zusammen mit entsprechenden Streben, eine Ebene eines rechtwinkligen Regals zusammensetzen.

Erfindungsgemäß sind die Kupplungselemente durch ein Zentralelement mit einander verbunden.

Das Zentralelement weist ein Rohr auf, dessen Innendurchmesser einem Aussendurchmesser einer Vertikalstrebe entspricht. Etwa in der Mitte des Rohres weist dieses eine Lochplatte oder Trennplatte auf, die senkrecht zur Rohrachse verläuft und in der Mitte ein Loch aufweist. Zweite Streben oder Vertikalstreben sind zur Verbindung von Regalebenen senkrecht zu den Regalebenen angeordnet. Sie weisen an einem Ende ein durch das Loch passendes Aussengewinde auf, und an einem anderen Ende ein korrespondierendes Innengewinde. Alternativ dazu weisen die Vertikalstreben an beiden Enden Innengewinde auf, in welche ein Gewindestück einschraubbar ist. Zur Montage mehrerer Gestellebenen wird eine erste Vertikalstrebe in das Rohr des Zentralelements und mit dem Aussengewinde respektive einem eingedrehten Gewindestück durch das Loch gesteckt und mit dem Innengewinde einer zweiten Vertikalstrebe verschraubt.

Das Zentralelement kann auch anders als rohrförmig, jedoch auch mit rotationszylindrischen Aussparungen zur Aufnahme von Vertikalstreben ausgestaltet sein. Diese rotationszylindrischen Aussparungen sind vorzugsweise mit demselben Innendurchmesser und miteinander fluchtend angeordnet, und durch ein Loch miteinander verbunden.

Der Erklärung halber wurde die Erfindung mit Bezug auf eine horizontale respektive vertikale Ausrichtung von Gestellelementen erklärt. Es können aber auch einzelne vertikale Gestellebenen mittels der Kupplungselemente miteinander verbunden werden, und diese Gestellebenen wiederum mittels horizontal verlaufender "Vertikalstreben" verbunden werden.

Ein Gestellsystem gemäss der Erfindung weist die beschriebenen Verbindungselemente und Streben auf. Die Streben zur Verbindung mit einem Kupplungselement sind entweder durchgehend oder zumindest an den Enden rohrförmig ausgebildet. Der Innendurchmesser dieser rohrförmigen Abschnitte entspricht dem Aussendurchmesser der Kupplungselemente. Die Streben weisen an mindestens einem Ende jeweils mindestens ein Verriegelungselement auf, welches von der Rohrwand aus in radialer Richtung in das Lumen, also in den Hohlraum des Rohres hineinragt. Verriegelungselemente an beiden Enden einer Streben fluchten miteinander, das heisst, sie sind in Umfangsrichtung gleich orientert. Beim Verbinden mit symmetrischen Verbindungselemente an beiden Enden einer Strebe sind auch die Verbindungselemente gleich orientiert.

Eine Giessform zur Herstellung eines Verbindungselements gemäss der Erfindung weist zwei im Wesentlichen spiegelsymmetrische Formhälften auf. Eine Trennebene zwischen den Formhälften entspricht dabei einer Ebene, die durch die Achsen der mindestens zwei Kupplungselemente definiert ist. Aufgrund der vorteilhaften Gestaltung der Verbindungselemente, insbesondere der Anordnung der Nuten und der Gestaltung des Zentralelements, sind keine weiteren Formteile zur Herstellung der Hinterschneidungen durch die Nuten notwendig.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen:
- Figuren 1 und 2: ein Verbindungselement mit zwei Kupplungselementen in einer perspektivischen Ansicht und einer Aufsicht;
- Figuren 3 und 4: ein Verbindungselement mit drei Kupplungselementen in einer perspektivischen Ansicht und einer Aufsicht;
- Figur 5: eine perspektivische Ansicht eines Verbindungselements und einer Strebe;
- Figur 6: eine perspektivische Ansicht eines Gestells mit Detailansichten von Verbindungen von Vertikalstreben; und
- Figur 7: eine Aufsicht auf ein Gestell, gebildet unter Verwendung von Verbindungselementen mit vier Kupplungselementen.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

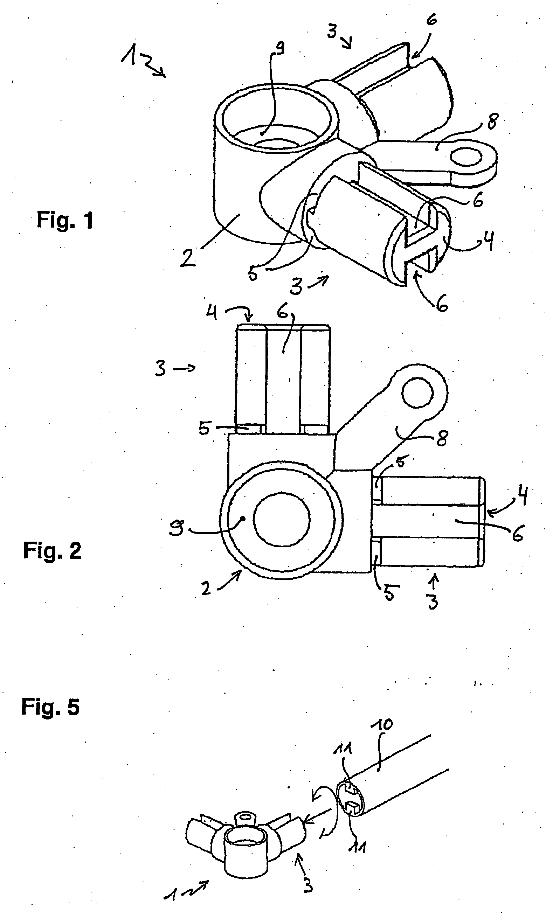

Figuren 1 und 2 zeigen ein Verbindungselement 1 mit zwei Kupplungselementen 3 in einer perspektivischen Ansicht und einer Aufsicht. Das Verbindungselement ist ein Eckverbindungsstück 1 mit einem Zentralelement 2 und zwei Kupplungselementen 3. Ein Kupplungselement 3 weist mindestens eine Kupplungsausnehmung auf, die durch eine Quernut 5 und eine beispielsweise rechteckförmige Längsnut 6 gebildet ist. Vorzugsweise weist ein Kupplungselement 3 zwei gegenüberliegende Kupplungsausnehmungen auf, die in Umfangsrichtung symmetrisch zueinander angeordnet sind.

Ein Kupplungselement 3 weist vorzugsweise einen vollzylindrischen Teil, also einen Teil ohne Ausnehmungen auf. Dieser weist im Querschnitt eine äussere Begrenzung entsprechend einem Strebenquerschnitt auf. Bei rotationszylindrischen Streben 10 ist der vollzylindrische Teil ebenfalls rotationszylindrisch und weist einen Aussendurchmesser entsprechend demjenigen einer Strebe 10 auf. Auf der nach aussen gerichteten, also der Strebe 10 zugewandten Seite bildet der vollzylindrische Teil eine Begrenzung der Quernut 5. Der vollzylindrische Teil erzielt eine Beabstandung einer ersten Strebe vom Zentralelement 2 und von weiteren gegebenenfalls am Zentralelement 2 und im Winkel zur ersten Strebe montierten weiteren Streben. Beim Verdrehen der Strebe 10 bei der Montage werden deshalb das Zentralelement 2 oder andere Streben 10 nicht verkratzt. Bei dem in den Figuren gezeigten relativ dünnwandigen Zentralelement 2 wird durch die vollzylindrischen Teile die Stabilität des Verbindungselements 1 erhöht.

Vom Zentralelement 2 gehen zwischen den Kupplungselementen 3 angeordnete Tragarme 8 zu Befestigung von beispielsweise plattenförmigen Möbelelbauelementen, insbesondere Tablaren aus. Diese sind beispielsweise für Schraubverbindungen oder zum Einsetzen von Saugnäpfen zur Halterung von Glasplatten vorgesehen. Die Tragarme 8 sind für das Auflegen der Möbelelbauelemente vorgesehen. Sie unterstützen die Möbelelbauelemente, so dass die Möbelelbauelemente ohne weitere Befestigungsmittel in ein montiertes. Rohrsystem eingelegt werden können. Die Tragarme 8 sind in Ecken zwischen den vollzylindrischen Teilen eingesetzt, wodurch eine stabile Befestigung der Tragarme 8 erzielbar ist.

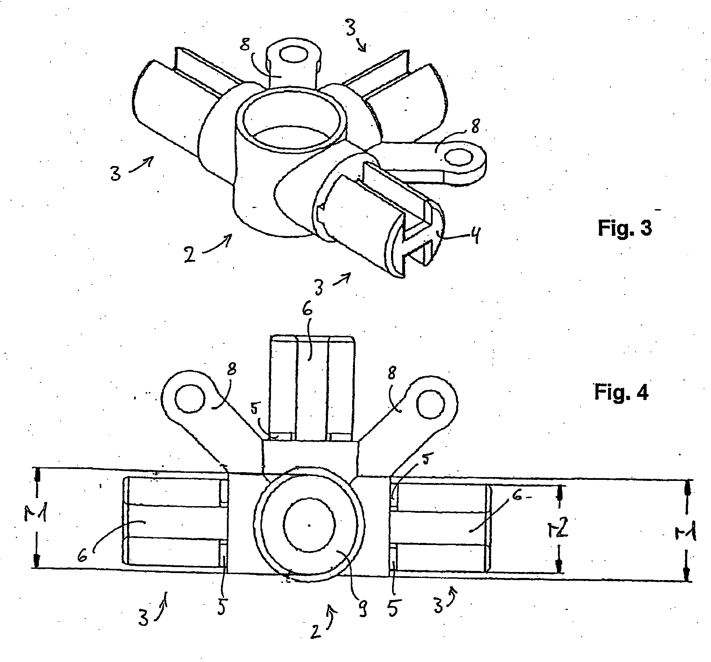

Figuren 3 und 4 zeigen ein Verbindungsstück 1 mit drei Kupplungselementen 3 in einer perspektivischen Ansicht und einer Aufsicht. Der vollzylindrische Teil eines Kupplungselements 3, erstreckt sich von der Quernut 5 zum Zentralelement 2. Ein Durchmesser r1 dieses vollzylindrischen Teils beträgt beispielsweise 19 mm, vorzugsweise zumindest annähernd einem Aussendurchmesser einer Strebe 10 entsprechend. Eine Länge des vollzylindrischen Teils beträgt beispielsweise einen Viertel eines Strebendurchmessers, oder 2 mm bis 10 mm. Ein Durchmesser r2 des Kupplungselements 3 im Bereich zwischen Quernut 5 und Stirnfläche des Kupplungselements 3 beträgt beispielsweise 16.5 mm, entsprechend einem Innendurchmesser einer Strebe 10. Das Zentralelement 2 wird durch ein Rohr zur Aufnahme einer Vertikalstrebe 14 gebildet. Das Rohr weist in axialer Richtung ungefähr in der Mitte eine senkrecht zur Rohrachse angeordnete Lochplatte oder Trennplatte 9 auf. Diese weist in der Mitte ein Loch auf. Eine Vertikalstrebe 14 weist entweder auf der ganzen Länge einen Aussendurchmesser entsprechend dem Innendurchmesser des Zentralelements 2 auf, oder einen Aussendurchmesser gleich dem Aussendurchmesser des Zentralelements 2 und einen in das Zentralelement 2 passenden Zapfen.

Figur 5 zeigt eine perspektivische Ansicht eines Eckverbindungsstücks 1 und einer Strebe 10. Mit Pfeilen ist eine geradlinige Bewegung zum Aufstecken der Strebe 10 auf ein Kupplungselement 3 und eine anschliessende Verdrehung zur Verriegelung angezeigt. Zwei Verriegelungselemente 11 sind am äussersten Ende der Strebe 10 angeordnet. Eine Begrenzungsfläche der Verriegelungselemente 11 fällt also mindestens annähernd mit einer Endbegrenzungsfläche der Strebe 10 zusammen. Die Verriegelungselemente 11 erstrecken sich vom Rohrumfang in radialer Richtung zur Rohrachse der Strebe 10 hin. Beim Aufstecken werden die Verriegplungselemente 11 durch die Quernuten 5 des Kupplungselements 3 geführt, bis das Rohr an den vollzylindrischen Teil des Kupplungselements 3 anstösst. Beim anschliessenden Verdrehen verklemmen sich die Verriegelungselemente 11 gegen eine Wand der Quernuten 5. Dazu ist eine Breite der Quernut, von einem Übergang zur Längsnut aus in beide Richtungen senkrecht zur Zylinderachse ausgehend in axialer Richtung, das heisst parallel zu Zylinderachse, grösser ist als an einer von der Längsnut entfernteren Stelle. An einer gegenüberliegenden, dem Zentralelement 2 zugewandten Seite, weist die Quernut eine im wesentlichen plane Fläche, zumindest an der Peripherie, gegen welche die Strebe 10 gedrückt wird.

In einer bevorzugten Ausführungsform der Erfindung nimmt die Breite der Quernut 5, von der Längsnut 6 ausgehend, zuerst ab, dann zu, und dann wieder ab. Dadurch entsteht ein Einrastelement 7 , welches ein Einrasten des Verriegelungselements 11 beim Verdrehen bewirkt und ein unbeabsichtigtes Lösen der Strebe 10 verhindert.

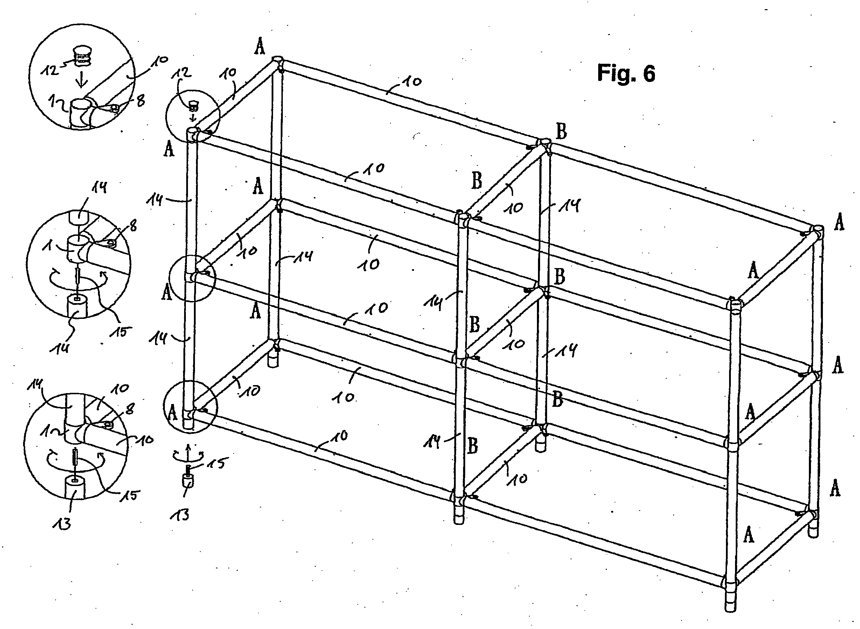

Figur 6 zeigt eine perspektivische Ansicht eines Gestells mit Detailansichten von Verbindungen von Vertikalstreben. An den mit A bezeichneten Stellen sind zweiarmige Eckverbindungsstücke eingesetzt, an den mit B bezeichneten Stellen dreiarmige Eckverbindungsstücke. Übereinanderliegende horizontale Ebenen des Gestells sind durch Vertikalstreben 14 verbunden. Die Vertikalstreben 14 weisen an beiden Enden jeweils ein konzentrisches und in die Strebe hineinragendes Innengewinde auf. Ein in das Innengewinde passendes Gewindestück 15 ist durch die Öffnung der Lochplatte 9 eines Zentralelements führbar und verbindet zwei übereinander angeordnete Vertikalstreben 14. An einer Oberseite des Gestells sind Deckel 12, beispielsweise aus Kunststoff, in die Zentralelemente 2 eingesetzt. An einer Unterseite des Gestell sind Füsse 13 mit denselben Gewinden wie die Vertikalstreben 14 in die jeweiligen Zentralelemente 2 respektive die darüberliegenden Vertikalstreben 14 eingeschraubt.

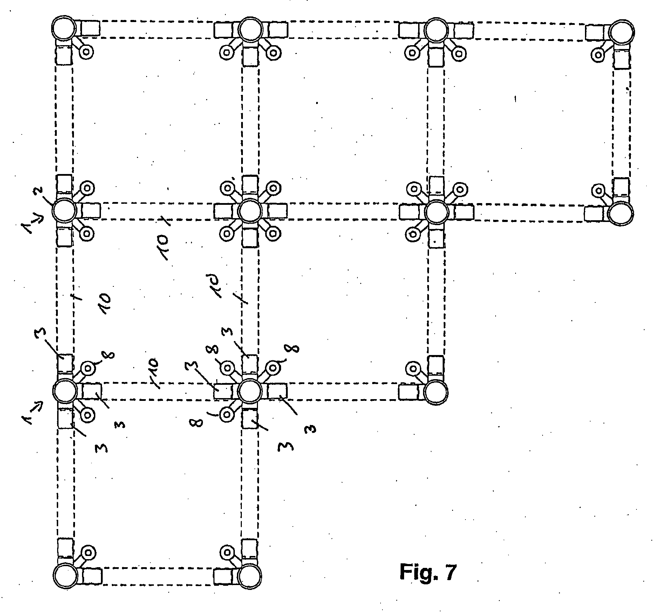

Figur 7 zeigt eine Aufsicht auf ein Gestell, gebildet unter Verwendung von Verbindungselementen mit zwei, drei und vier Kupplungselementen.

Die Eckverbindungsstücke 1 lassen sich durch Giessverfahren einstückig herstellen, wobei aufgrund der vorteilhaften Form lediglich zwei im Wesentlichen identische Formhälften benötigt werden. Alle Hinterschneidungen durch die Nuten können so problemlos erzeugt werden. Die Verriegelungselemente 11 sind beispielsweise im wesentlichem rechteckige oder halbrunde Zungen, die in die Streben eingeschweisst, oder gelötet werden. Alternativ können sie auch durch Biegen eines hervorstehenden Teils der Strebe erzeugt werden.

### BEZUGSZEICHENLISTE

- 1: Eckverbindungsstück
- 2: Zentralelement
- 3: Kupplungselement
- 4: Stirnseite
- 5: Quernut
- 6: Längsnut
- 7: Einrastelement
- 8: Tragarme
- 9: Lochplatte
- 10: Strebe
- 11: Verriegelungselement
- 12: Deckel
- 13: Fuss
- 14: Vertikalstrebe
- 15: Gewindestück
- A: zweiarmiges Eckverbindungsstück
- B: dreiarmiges Eckverbindungsstück

## Patentansprüche

1. Verbindungselement (1) zur Verbindung von Streben (10) eines möbelartigen Gestells, aufweisend zwei bis vier, von einem Zentralelement (2) ausgehende Kupplungselemente (3), deren jeweilige Längsachsen in einer gemeinsamen Ebene liegen, zur Verbindung mit rohrförmigen Streben (10), wobei die Kupplungslemente (3) eine rotationszylindrische Grundform mit mindestens einer Kupplungsausnehmung aufweisen, wobei eine Kupplungsausnehmung gebildet ist durch eine im wesentlichen senkrecht zu einer Achse des Zylinders der rotationszylindrischen Grundform des Kupplungslementes (3) verlaufende Quernut (5) und durch eine parallel zur Achse des Zylinders von einer Stirnseite (4) des Kupplungselements (3) bis zur Quernut (5) führende Längsnut (6),
**dadurch gekennzeichnet, dass** das Zentralelement (2) ein Rohr mit zwei rotationszylindrischen Aussparungen aufweist, die mit demselben Innendurchmesser und miteinander fluchtend angeordnet sind, und durch ein Loch in der Mitte einer Lochplatte, welche etwa in der Mitte des Rohres liegt, miteinander verbunden sind, wobei die Achse der beiden rotationszylindrischen Aussparungen senkrecht zu den Achsen der Zylinder der Kupplungselemente (3) und senkrecht zur Lochplatte verläuft.

2. Verbindungselement (1) gemäss Anspruch 1, **dadurch gekennzeichnet, dass** ein Kupplungselement (3) einen vollzylindrischen Teil aufweist, der im Querschnitt eine äussere Begrenzung entsprechend einem Strebenquerschnitt aufweist und zur Beabstandung einer montierten Strebe (10) vom Zentralelement (2) ausgebildet ist.

3. Verbindungselement (1) gemäss Anspruch 1 oder 2, **dadurch gekennzeichnet, dass** die Längsnut (6) und die Quernut (5) in Achsrichtung des Kupplungselements gesehen symmetrisch zueinander angeordnet sind.

4. Verbindungselement (1) gemäss einem der Ansprüche 1 bis 3, **dadurch gekennzeichnet, dass** eine Breite der Quernut (5), von der Längsnut (6) ausgehend in axialer Richtung breiter ist als an einer von der Längsnut (6) entfernteren Stelle.

5. Verbindungselement (1) gemäss Anspruch 4, **dadurch gekennzeichnet, dass** die Quernut (5) ein Einrastelement (7) aufweist.

6. Verbindungselement (1) gemäss einem der Ansprüche 1 bis 5, **dadurch gekennzeichnet, dass** es zwei Kupplungsausnehmungen aufweist, die einander bezüglich der Achse des Zylinders gegenüberliegend angeordnet sind.

7. Verbindungselement (1) gemäss einem der Ansprüche 1 bis 6, **dadurch gekennzeichnet, dass** das Zentralelement (2) Tragarme (8) zur Halterung von Möbelbauelementen aufweist, insbesondere zur unterstützenden Halterung.

8. Gestellsystem, aufweisend Verbindungselemente (1) gemäss einem der Ansprüche 1 bis 7 und rohrförmige Streben (10), wobei die Streben (10) an mindestens einem Ende jeweils mindestens ein Verriegelungselement (11) aufweisen, welches von der Rohrwand aus in radialer Richtung in das Lumen des Rohres hineinragt.

9. Gestellsystem gemäss Anspruch 8, **dadurch gekennzeichnet, dass** die Streben (10) an beiden Enden zuäusserst mindestens ein Verriegelungselement (11) aufweisen, und diese Vernegelungselemente (11) in Umfangsrichtung gleich orientiert sind.

10. Gestellsystem gemäss Anspruch 8 oder 9, **dadurch gekennzeichnet, dass** es zweite Streben (14) aufweist, welche jeweils an einem Ende ein Innengewinde und am anderen Ende ebenfalls ein Innengewinde oder ein korrespondierendes Aussengewinde aufweisen.

## Claims

1. A connecting element (1) for the connection of struts (10) of a furniture-like frame, comprising two to four coupling elements (3) which depart from a central element (2) and whose respective longitudinal axes lie in a common plane, for the connection to tubular struts (10), wherein the coupling elements (3) have a rotationally cylindrical basic shape with at least one coupling recess, wherein a coupling recess is formed by a transverse groove (5) running essentially perpendicularly to an axis of the cylinder of the rotationally symmetrical basic shape of the coupling element (3) and by a longitudinal groove (6) running parallel to the axis of the cylinder from a face side (4) of the coupling element (3) up to the transverse groove (5),
**characterised in that** the central element (2) comprises a tube with two rotationally cylindrical hollows which are with the same inner diameter and are arranged aligned to one another and are connected to one another by a hole in the middle of a holed plate which is located approximately in the middle of the tube, wherein the axis of the two rotationally symmetrical hollows runs perpendicularly to the axes of the cylinders of the coupling elements (3) and perpendicularly to the holed plate.

2. A connecting element (1) according to claim 1, **characterised in that** a coupling element (3) comprises a solid-cylindrical part which in cross section has an outer limitation corresponding to a strut cross section and is designed for spacing an assembled strut (10) from the central element (2).

3. A connecting element (1) according to claim 1 or 2, **characterised in that** the longitudinal groove (6) and the transverse groove (5) are arranged symmetrically to one another seen in the axis direction of the coupling element.

4. A connecting element (1) according to one of the claims 1 to 3, **characterised in that** a width of the transverse groove (5), departing from the longitudinal groove (6) is wider in the axial direction than at a location more remote from the longitudinal groove (6).

5. A connecting element (1) according to claim 4, **characterised in that** the transverse groove (5) comprises a snap-in element (7).

6. A connecting element (1) according to one of the claims 1 to 5 **characterised in that** it comprises two coupling recesses which are arranged lying opposite one another with respect to the axis of the cylinder.

7. A connecting element (1) according to one of the claims 1 to 6, **characterised in that** the central element (2) comprises carrier arms (8) for holding furniture construction elements, in particular for the supporting holding.

8. A frame system comprising connecting elements (1) according to one of the claims 1 to 7, and tubular struts (10), wherein the struts (10) at least at one end in each case comprise a locking element (11) which projects from the tube wall in the radial direction into the lumen of the tube.

9. A frame system according to claim 8, **characterised in that** the struts (10) at both ends at the very outside comprise at least one locking element (11), and these locking elements (11) are equally orientated in the peripheral direction.

10. A frame system according to claim 8 or 9, **characterised in that** it comprises second struts (14) which in each case at one end comprise an inner thread and at the other end likewise an inner thread or a corresponding outer thread.

## Revendications

1. Elément de liaison (1) destiné à relier des entretoises (10) d'un bâti de type meuble,
l'élément de liaison présentant deux à quatre éléments d'accouplement (3) destinés à être reliés à des entretoises tubulaires (10), partant d'un élément central (2) et dont tous les axes longitudinaux sont situés dans un plan commun,
les éléments d'accouplement (3) présentant une forme de base en cylindre de rotation dotée d'au moins une découpe d'accouplement,
une découpe d'accouplement étant formée par une rainure transversale (5) qui s'étend essentiellement à la perpendiculaire de l'axe du cylindre de la forme de base en cylindre de rotation de l'élément d'accouplement (3) et par une rainure longitudinale (6) parallèle à l'axe du cylindre et conduisant d'un côté frontal (4) de l'élément d'accouplement (3) à la rainure transversale (5),
**caractérisé en ce que**
l'élément central (2) présente un tube avec deux réservations cylindriques en rotation présentant le même diamètre intérieur, alignées l'une par rapport à l'autre et reliées l'une à l'autre par un trou au milieu d'une plaque perforée qui est située approximativement au milieu du tube et
**en ce que** l'axe des deux réservations cylindriques en rotation s'étend perpendiculairement aux axes des cylindres des différents éléments d'accouplement (3) et perpendiculairement à la plaque perforée.

2. Elément de liaison (1) selon la revendication 1, **caractérisé en ce qu'**un élément d'accouplement (3) présente une partie de cylindre plein dont la section transversale est limitée extérieurement en correspondance à la section transversale d'une entretoise et configurée pour maintenir une entretoise (10) montée à distance de l'élément central (2).

3. Elément de liaison (1) selon les revendications 1 ou 2, **caractérisé en ce que** la rainure longitudinale (6) et la rainure transversale (5) sont disposées symétriquement l'une par rapport à l'autre dans la direction axiale de l'élément d'accouplement.

4. Elément de liaison (1) selon l'une des revendications 1 à 3, **caractérisé en ce que** la largeur de la rainure transversale (5) partant de la rainure longitudinale (6) est plus grande dans la direction axiale qu'en un emplacement plus éloigné de la rainure longitudinale (6).

5. Elément de liaison (1) selon la revendication 4, **caractérisé en ce que** la rainure transversale (5) présente un élément d'encliquetage (7).

6. Elément de liaison (1) selon l'une des revendications 1 à 5, **caractérisé en ce qu'**il présente deux réservations d'accouplement qui sont disposées en opposition l'une à l'autre par rapport à l'axe du cylindre.

7. Elément de liaison (1) selon l'une des revendications 1 à 6, **caractérisé en ce que** l'élément central (2) présente des bras de support (8) qui retiennent les éléments de montage de meuble et en particulier les retiennent en les soutenant.

8. Système de bâti présentant des éléments de liaison (1) selon l'une des revendications 1 à 7 et des entretoises tubulaires (10), chacune des entretoises (10) présentant à au moins une extrémité un élément de verrouillage (11) qui, partant de la paroi du tube, pénètre dans la direction radiale dans la lumière du tube.

9. Système de bâti selon la revendication 8, **caractérisé en ce que** les entretoises (10) présentent deux extrémités au moins un élément de verrouillage (11), ces éléments de verrouillage (11) présentant la même orientation dans la direction périphérique.

10. Système de bâti selon les revendications 8 ou 9, **caractérisé en ce qu'**il présente des deuxièmes entretoises (14) qui présentent chacune à une extrémité un filet intérieur et à l'autre extrémité également un filet intérieur ou un filet extérieur correspondant.
